# EUROPEAN PATENT APPLICATION

(11) **EP 2 664 431 A2**
(43) Date of publication of application: **20.11.2013**
(21) Application number: 11855647.1
(22) Date of filing: 15.12.2011
(51) Int. Cl.: B29C 33/42, B29C 35/02, B29C 35/04

(54) **METHOD FOR MANUFACTURING A POLYMER-MOLDED MATERIAL USING A MOLD WHICH EASILY FORMS A 3-DIMENSIONAL SURFACE PATTERN, AND MOLDED MATERIAL FOR A HOME APPLIANCE HAVING THE 3-DIMENSIONAL SURFACE PATTERN**

(30) Priority: 11.01.2011 KR 20110002714
(71) Applicant: LG Hausys, Ltd., Seoul 150-721 (KR)
(72) Inventor: YANG, In-Suk, Ulsan 681-814 (KR); LEE, Jong-Chul, Cheongju-si Chungcheongbuk-do 361-775 (KR); LEE, Jae-Eun, Seoul 139-896 (KR)
(74) Representative: Zacco Denmark A/S
(86) International application number: PCT/KR2011/009646
(87) International publication number: WO 2012/096446

(57) **Abstract**

The present invention relates to a method for manufacturing a polymer-molded material which can easily form a three-dimensional surface shape and minimize deformation. The method for manufacturing the polymer-molded material includes: (a) preparing a lower mold on which a three-dimensional pattern, for imparting a surface shape of the molded material to a surface to be formed, is formed; (b) coupling a gasket on an edge of the formed surface of the lower mold; (c) coupling an upper mold including a raw material injection part to the gasket of the lower mold; (d) injecting a raw material of the polymer-molded material onto the formed surface of the lower mold through the raw material injection part of the upper mold; (e) heat-curing the raw material and transferring the three-dimensional pattern onto the formed surface of the lower mold; and (f) additionally heat-curing the raw material, which does not react in the step (e), through heat treatment.

## Description

### [Technical Field]

The present invention relates to technology for manufacturing a polymer-molded material used as exterior materials for home appliances or furniture, and more particularly, to a method for manufacturing a polymer-molded material using a mold which can easily form a three-dimensional surface pattern even when the three-dimensional pattern is relatively thick, and a molded material for home appliances having a three-dimensional surface pattern.

### [Background Art]

Polymer-molded materials have generally been used as exterior materials for home appliances or furniture.

Various designs currently applied to exterior materials for home appliances or furniture generally have a two-dimensional shape.

Recently, various attempts have been made to realize a three-dimensional surface shape instead of such a two-dimensional shape.

A three-dimensional surface pattern may be formed by extrusion molding or injection molding for manufacture of a polymer-molded material.

Among these, extrusion molding has a problem in that it can form only a relatively thin three-dimensional pattern due to strength of the polymer-molded material.

Injection molding can form a relatively thick three-dimensional pattern. However, formation of a large-sized product through injection molding is difficult due to mold deformation or mold release.

### [Disclosure]

### [Technical Problem]

An aspect of the present invention is to provide a method for manufacturing a polymer-molded material, which can easily form a three-dimensional surface pattern, prevent mold deformation, and facilitate mold release.

Another aspect of the present invention is to provide an exterior material for home appliances or furniture, the surface of which has a three-dimensional pattern formed by the foregoing method.

A further aspect of the present invention is to provide a thin plate-shaped molded material for home appliances, the surface of which has a three-dimensional pattern to decorate an outer surface of a home appliance.

### [Technical Solution]

In accordance with one aspect of the present invention, a method of manufacturing a polymer-molded material includes: (a) preparing a lower mold having a molding surface formed with a three-dimensional pattern for imparting a surface shape to a molded material; (b) coupling a gasket to an edge of the molding surface of the lower mold; (c) coupling an upper mold including a raw material injection port to the gasket of the lower mold; (d) injecting a raw material for a polymer-molded material onto the molding surface of the lower mold through the raw material injection port of the upper mold; (e) transferring the three-dimensional pattern from the molding surface of the lower mold while heat-curing the raw material; and (f) additionally heat-curing the raw material unreacted in the step of (e) through heat treatment.

In accordance with another aspect of the present invention, a method of manufacturing polymer-molded material includes: (a) preparing a lower mold having a molding surface formed with a three-dimensional pattern for imparting a surface shape to a molded material; (b) coupling a gasket to an edge of the molding surface of the lower mold; (c) injecting a raw material for a polymer-molded material onto the molding surface of the lower mold; (d) coupling an upper mold to the gasket of the lower mold; (e) transferring the three-dimensional pattern from the molding surface of the lower mold while heat-curing the raw material; and (f) additionally heat-curing the raw material unreacted in step (e) through heat treatment.

In accordance with a further aspect of the present invention, a method of manufacturing a polymer-molded material includes: (a) preparing a mold having a molding surface formed with a three-dimensional pattern for imparting a surface shape to a molded material; (b) coupling a gasket to an edge of the molding surface of the mold; (c) injecting a raw material for a polymer-molded material onto the molding surface of the mold; and (d) transferring the three-dimensional pattern from the molding surface of the mold while heat-curing the raw material.

In accordance with yet another aspect of the present invention, there is provided an exterior material for home appliances or furniture, wherein a three-dimensional pattern is transferred to a cured material while a resin composition curable by heat, light or electron beam irradiation is cured on a molding surface of a mold formed with a three-dimensional pattern, so that the three-dimensional pattern can be formed on the surface of the cured material.

In accordance with yet another aspect of the present invention, there is provided a molded material for decorating an outer surface of a home appliance, which has a thickness of 2 mm to 7 mm and comprises a three-dimensional surface having a three-dimensional pattern and a flat rear surface attached to the outer surface of the home appliance.

### [Advantageous Effects]

According to the present invention, the method of manufacturing a polymer-molded material can transfer a three-dimensional pattern formed on a molding surface of a mold to a cured material while a raw material is cured in the mold, whereby the three-dimensional pattern can be easily imparted to the surface of the manufactured polymer-molded material.

In addition, according to the present invention, the method of manufacturing a polymer-molded material employs a mold made of metal or the like, thereby enabling precise formation of a three-dimensional pattern on the surface of the polymer-molded material while facilitating mold release.

Further, according to the present invention, the method of manufacturing a polymer-molded material prevents mold deformation by attaching a frame unit made of glass or the like to an outside of the mold.

### [Description of Drawing]

Fig. 1 is a schematic flowchart of a method of manufacturing a polymer-molded material according to one embodiment of the present invention.
Fig. 2 is a sectional view of one example of a lower mold applicable to the present invention.
Fig. 3 is a front view of the lower mold applicable to the present invention.
Fig. 4 is a sectional view of another example of a lower mold applicable to the present invention.
Fig. 5 shows one example of a lower mold and an upper mold applicable to the present invention.
Fig. 6 shows another example of a lower mold and an upper mold applicable to the present invention.
Fig. 7 is a schematic flowchart of a method of manufacturing a polymer-molded material according to another embodiment of the present invention.
Fig. 8 is a schematic flowchart of a method of manufacturing a polymer-molded material according to a further embodiment of the present invention.

### [Best Mode]

The above and other aspects, features, and advantages of the present invention will become apparent from the detailed description of the following embodiments in conjunction with the accompanying drawings. It should be understood that the present invention is not limited to the following embodiments and may be embodied in different ways, and that the embodiments are provided for complete disclosure and thorough understanding of the invention to those skilled in the art. The scope of the invention is defined only by the claims. Like components will be denoted by like reference numerals throughout the specification.

Below, a method of manufacturing a polymer-molded material using a mold which can easily form a three-dimensional surface pattern and a molded material for home appliances having the three-dimensional surface pattern according to embodiments of the present invention will be described in detail with reference to the accompanying drawings.

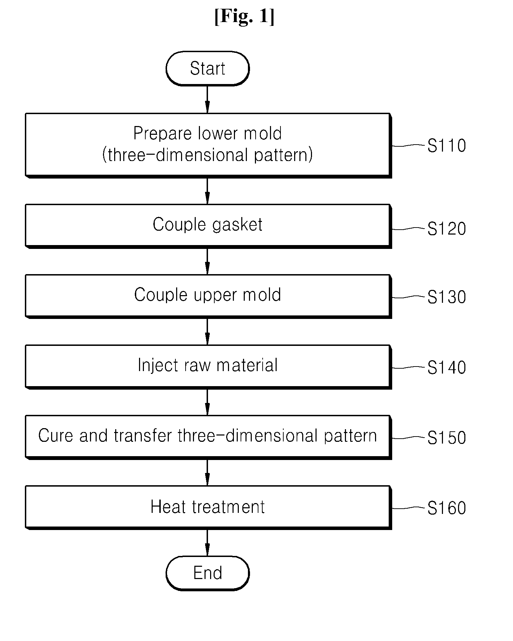

Fig. 1 is a schematic flowchart of a method of manufacturing a polymer-molded material according to one embodiment of the present invention.

Referring to Fig. 1, the method of manufacturing the polymer-molded material includes preparing a lower mold (S110), coupling a gasket (S120), coupling an upper mold (S130), injecting a raw material (S140), curing/transferring a three-dimensional pattern (S150), and heat treatment (S160).

In operation S110, a lower mold having a molding surface formed with a three-dimensional pattern for imparting a surface shape to a molded material is prepared.

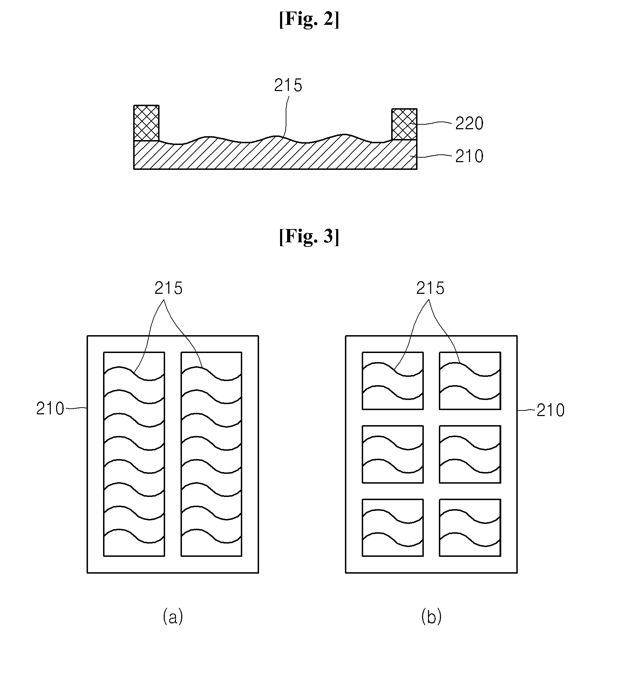

Figs. 2 and 3 show one example of a lower mold applicable to the present invention, in which Fig. 2 is a sectional view and Fig. 3 is a front view.

The lower mold 210 may be made of metal, Teflon, rubber or the like, which can easily form a three-dimensional pattern on a molding surface 215 thereof. Further, the lower mold may be made of stainless steel having excellent properties in terms of corrosion resistance and strength.

The three-dimensional pattern formed on the molding surface 215 of the lower mold 210 may be formed to have various areas corresponding to desired sizes of products, as shown in (a) and (b) of Fig. 3.

Here, since the aforementioned materials are vulnerable to bending, the mold can be deformed when these materials are used alone.

To prevent this problem, a frame unit 310 made of a glass or metal honeycomb sheet may be attached to an outer surface of the lower mold 210, as shown in Fig. 3. The frame unit 310 made of glass and the like is invulnerable to bending, thereby suppressing deformation of the lower mold 210.

The three-dimensional pattern on the molding surface 215 of the lower mold 210 may be formed by various methods, such as numerical control (NC) processing, chemical etching, stamping, etc.

The three-dimensional pattern on the molding surface 215 of the lower mold 210 determines the thickness of a three-dimensional pattern on the polymer-molded material. Thus, if the three-dimensional pattern has a thickness of 1 mm or more on the molding surface 215 of the lower mold 210, the three-dimensional pattern may also be formed to have a thickness of 1 mm or more on the surface of the polymer-molded material.

The molding surface 215 of the lower mold 210 may be coated with a release agent to a thickness of about 2 µm for easy mold release.

Next, in operation S120 of coupling a gasket, the gasket is coupled to an edge of the molding surface of the lower mold.

The gasket 220 (see Fig. 2) not only has sealing effects but also determines the thickness of the molded material. The gasket may be formed of silicone, rubber, and the like.

Then, in operation S130 of coupling an upper mold, the upper mold formed with a raw material injection port is coupled to the gasket of the lower mold.

Here, a molding surface of the upper mold may be flat or have a three-dimensional pattern.

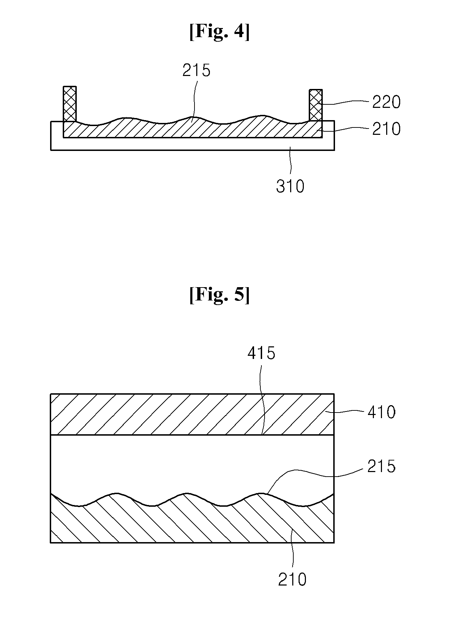

First, as shown in Fig. 5, the molding surface of the upper mold 410 may be flat. In this case, since it is necessary for the molding surface to be smooth, the upper mold 410 is preferably formed of glass or metal, more preferably, glass. Since the upper mold 410 has a flat molding surface, the polymer-molded material has a three-dimensional pattern on one surface thereof after molding. Since a back side of the surface having the three-dimensional pattern is flat, it is easy to perform coating for subsequent surface treatment, printing for imparting design effects, and the like.

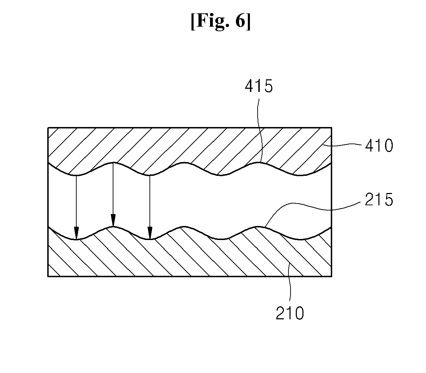

Also, as shown in Fig. 6, the upper mold 410 may include a molding surface 415 formed with a pattern opposite to the three-dimensional pattern formed on the molding surface 215 of the lower mold 210. That is, the molding surface 415 of the upper mold 410 may have a recessed portion corresponding to a protruding portion on the molding surface 215 of the lower mold 210. On the other hand, the molding surface 415 of the upper mold 410 may have a protruding portion corresponding to a recessed portion on the molding surface 215 of the lower mold 210.

The structure of the lower mold 210 and the upper mold 410, the molding surfaces of which have the three-dimensional patterns opposite to each other, may provide a uniform degree of contraction when the polymer-molded material is cured. Therefore, in manufacture of the polymer-molded material, it is possible to secure a uniform thickness of the three-dimensional surface pattern on the polymer-molded material while preventing a void from being generated on the surface or inside the polymer-molded material.

The upper and lower molds may be made of metal having a thickness of 3 ∼ 20 mm. If the upper and lower molds have a thickness of less than 3mm, the molds can be vulnerable to bending. On the other hand, if the upper and lower molds have a thickness of greater than 20 mm, it difficult to manipulate the molds.

Next, in operation S140 of injecting a raw material, a raw material for the polymer-molded material is injected onto the molding surface of the lower mold through the raw material injection port of the upper mold. The raw material injection port may have a hole or slit shape which passes through the upper mold.

The raw material may be injected at about 25 .

Here, the raw material may include a heat-curable resin composition.

Here, examples of the resin composition may include acrylic resins, polycarbonate resins, acrylonitrile butadiene and styrene (ABS) resins, polyurethane resins, olefin resins, epoxy resins, melamine resins, unsaturated polyester resins, and the like. These resins may be used alone or in combination of two or more thereof. Also, the resin composition may further include alumina trihydrate (ATH) fillers and the like.

The resin compositions may be selected in various way depending on colors, physical properties of the polymer-molded material, and the like.

For example, when the polymer-molded material is transparent, the raw material may be a resin composition mainly containing methyl methacrylate (MMA). When the polymer-molded material is white, the raw material may be a resin composition mainly containing methyl methacrylate (MMA) and alumina trihydrate (ATH).

Here, the resin composition may have a viscosity ranging from 300 cPs to 500 cPs. Within this range, the resin composition can be easily injected. If the resin composition has a viscosity of less than 300 cPs, it can take a long time to cure the resin composition and the polymer-molded material can have insufficient density. If the resin composition has a viscosity higher than 500 cPs, it can be difficult to inject the resin composition.

The raw material may further include pearl, pigments, chips, and the like to impart design effects and the like.

Next, in operation S150 of curing/transferring a three-dimensional pattern, the raw material is heated in order to cure the raw material injected to the molding surface of the lower mold. Here, the three-dimensional pattern on the molding surface of the lower mold is transferred to the cured raw material.

In this operation, warm water having a temperature of 50-90 may be used to cure the raw material. If the temperature of the warm water is lower than 50 , heat curing can be insufficient. On the other hand, if the temperature of the warm water is higher than 90 , air bubbles can be generated during curing.

Next, in operation S160 of heat treatment, the raw material unreacted in operation of curing/transferring the three-dimensional pattern through heat treatment is additionally cured.

That is, in operation S160, a monomer and the like unreacted during curing is additionally cured to completely cure the polymer-molded material.

Since this operation is performed to additionally cure the monomer and the like unreacted upon curing, this operation may be performed using steam having a temperature higher than the temperature for curing, i.e., higher than 100, approximately 100°C to 200.

A time for operation S150 and operation S160 may vary depending on the raw material. For example, if the resin composition mainly containing methyl methacrylate (MMA) is used as the raw material in manufacture of a transparent polymer-molded material, about 3 hours may be required for curing and about 2 hours may be required for heat treatment. On the other hand, if the resin composition mainly containing methyl methacrylate (MMA) and alumina trihydrate (ATH) is used as the raw material in manufacture of a white transparent polymer-molded material, about 1-2 hours may be required for curing and about 30 minutes to 1 hour may be required for heat treat.

After heat treatment, the polymer-molded material is ejected from the upper and lower molds.

Then, subsequent processes, such as cleaning for removal of foreign matter from the surface of the polymer-molded material, spray coating for surface protection using polysilizane, silkscreen printing for imparting design effects, cutting, and the like, may be performed.

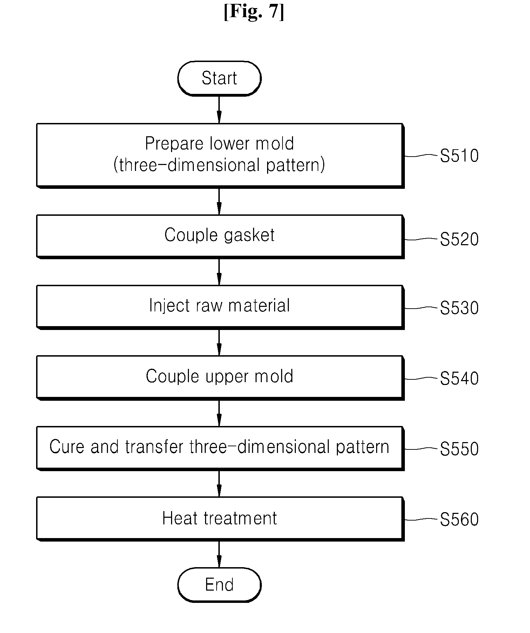

Fig. 7 is a schematic flowchart of a method of manufacturing a polymer-molded material according to another embodiment of the present invention.

Referring to Fig. 7, the method of manufacturing a polymer-molded material includes preparing a lower mold (S510), coupling a gasket (S520), injecting a raw material (S530), coupling an upper mold (S540), curing/transferring a three-dimensional pattern (S550), and heat treatment (S560).

In operation S510, a lower mold, which is formed on a molding surface thereof with a three-dimensional pattern for imparting a surface shape to a molded material, is prepared. In operation S520 of coupling a gasket, the gasket is coupled to an edge of the molding surface of the lower mold.

Then, in operation S530 of injecting a raw material, a raw material for the polymer-molded material is injected onto the molding surface of the lower mold. Next, in operation S540 of coupling an upper mold, the upper mold is coupled to the gasket of the lower mold.

Next, in operation S550 of curing/transferring a three-dimensional pattern, the three-dimensional pattern formed on the molding surface of the lower mold is transferred while heat-curing the injected raw material. In operation S560 of heat treatment, monomers and the like unreacted during curing are additionally cured through heat treatment.

Referring to Fig. 7, the raw material is first injected onto the molding surface of the lower mold, and then the upper mold is coupled thereto. In this case, the upper mold does not require a separate raw material injection port.

To prevent introduction of foreign matter and control the injection amount of the raw material, it is more advantageous that the raw material be injected after the upper mold and the lower mold are coupled to each other, as shown in Fig. 1. On the other hand, in terms of convenience in injection of the raw material, it is more advantageous that the upper mold be coupled to the lower mold after injecting the raw material onto the molding surface of the lower mold.

In the examples shown in Figs. 1 and 7, the polymer-molded material has been described as being manufactured through heat-curing.

However, the method of manufacturing a polymer-molded material is not limited to the examples shown in Figs. 1 and 7, and various curing methods may be used for manufacture of the polymer-molded material.

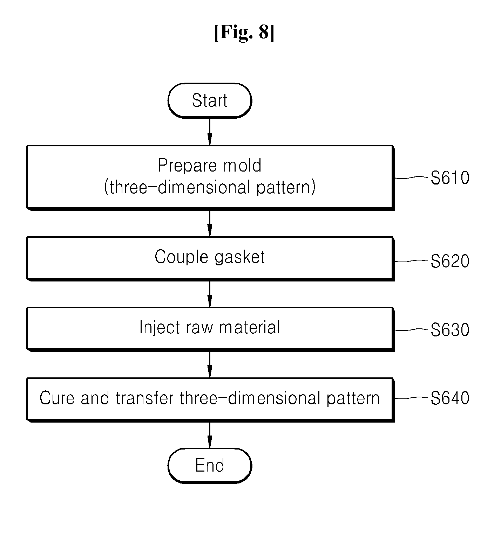

Fig. 8 is a schematic flowchart of a method of manufacturing a polymer-molded material according to a further embodiment of the present invention.

Referring to Fig. 8, the method of manufacturing a polymer-molded material includes preparing a mold (S610), coupling a gasket (S620), injecting a raw material (S630), and curing/transferring a three-dimensional pattern (S640)

In operation S610, a mold, which is formed on a molding surface thereof with a three-dimensional pattern for imparting a surface shape to a molded material, is prepared.

Next, in operation S620 of coupling a gasket, the gasket is coupled to the edge of the molding surface of the mold.

Then, in operation S630 of injecting a raw material, the raw material for the polymer-molded material is injected onto the molding surface of the mold. Here, the raw material may include a resin composition that is curable by heat, light, or electron beam irradiation.

Next, in operation S640 of curing/transferring a three-dimensional pattern, the three-dimensional pattern formed on the molding surface of the mold is transferred to the cured material while curing the injected raw material.

Here, various curing methods may be employed depending on raw materials.

For example, in the case of using a heat-curable resin composition as the raw material, heat-curing may be employed. On the other hand, in the case of using a UV-curable resin composition as the raw material, UV curing may be employed.

The polymer-molded material manufactured according to the present invention may be used as an exterior material for home appliances, such as a refrigerator, air conditioner, and the like, or an exterior material for furniture.

Here, the exterior material for home appliances or furniture is made of the resin composition curable by heat, light or electron beam irradiation on the molding surface of the mold having the three-dimensional pattern formed on the molding surface. The three-dimensional pattern on the molding surface of the mold is transferred to the cured material, thereby forming the three-dimensional pattern thereon.

The exterior material may be transparent or white according to raw materials.

Particularly, the three-dimensional pattern formed on the surface of the molded material may have a thickness of 1mm or more. As described above, this may be achieved by preparing a mold formed of a metal which is easily patterned and forming a three-dimensional pattern to a thickness of 1 mm or more on the mold through application of NC processing to a molding surface of the mold.

In particular, the molded material having the three-dimensional pattern may be easily applied to home appliances.

The molded material may decorate an outer surface of the home appliance. The molded material may have a thickness of 2 mm to 7 mm. If the molded material is thinner than 2 mm, the three-dimensional pattern can have an excessively low thickness. If the molded material is thicker than 7mm, costs can increase without any improvement in effects.

One surface of the molded material is a three-dimensional surface having a three-dimensional pattern. The other surface of the molded material is flat and attached to the outer surface of the home appliance.

As described above, the molded material may be manufactured by curing a resin composition in the mold having the three-dimensional pattern on the molding surface thereof. Further, the molded material may be acrylic artificial marble.

Although some embodiments have been described, it will be understood by those skilled in the art that these embodiments are provided for illustration only, and various modifications, changes, alterations and equivalent embodiments can be made without departing from the scope of the present invention. Therefore, the scope and sprit of the present invention should be defined only by the accompanying claims and equivalents thereof.

## Claims

1. A method of manufacturing a polymer-molded material, comprising:
(a) preparing a lower mold having a molding surface formed with a three-dimensional pattern for imparting a surface shape to a molded material;
(b) coupling a gasket to an edge of the molding surface of the lower mold;
(c) coupling an upper mold including a raw material injection port to the gasket of the lower mold;
(d) injecting a raw material for a polymer-molded material onto the molding surface of the lower mold through the raw material injection port of the upper mold;
(e) transferring the three-dimensional pattern from the molding surface of the lower mold while heat-curing the raw material; and
(f) additionally heat-curing the raw material unreacted in step (e) through heat treatment.

2. A method of manufacturing polymer-molded material, comprising:
(a) preparing a lower mold having a molding surface formed with a three-dimensional pattern for imparting a surface shape to a molded material;
(b) coupling a gasket to an edge of the molding surface of the lower mold;
(c) injecting a raw material for a polymer-molded material onto the molding surface of the lower mold;
(d) coupling an upper mold to the gasket of the lower mold;
(e) transferring the three-dimensional pattern from the molding surface of the lower mold while heat-curing the raw material; and
(f) additionally heat-curing the raw material unreacted in step (e) through heat treatment.

3. The method according to claim 1 or 2, wherein the three-dimensional pattern of the molding surface of the lower mold is formed by at least one selected from among numerical control (NC) processing, chemical etching, and stamping.

4. The method according to claim 1 or 2, wherein the raw material comprises a heat-curable resin composition.

5. The method according to claim 4, wherein the resin composition has a viscosity of 300 cPs to 500 cPs.

6. The method according to claim 4, wherein the raw material comprises at least one selected from among pearl, pigments and chips.

7. The method according to claim 1 or 2, wherein step (e) is performed using warm water having a temperature of 50 to 90.

8. The method according to claim 1 or 2, wherein step (f) is performed using steam having a temperature of 100 or higher.

9. The method according to claim 1 or 2, wherein the molding surface of the lower mold is coated with a release agent.

10. The method according to claim 1 or 2, wherein the lower mold comprises at least one material selected from among metal, Teflon and rubber.

11. The method according to claim 1 or 2, wherein a frame unit made of a glass or metal honeycomb sheet is attached to an outer surface of the lower mold.

12. The method according to claim 1 or 2, wherein the upper mold is made of glass or metal.

13. The method according to claim 1 or 2, wherein the upper mold comprises a flat molding surface.

14. The method according to claim 1 or 2, wherein the upper mold comprises a molding surface formed with a pattern opposite to the three-dimensional pattern formed on the molding surface of the lower mold.

15. The method according to claim 14, wherein the upper and lower molds are made of metal having a thickness of 3 mm to 20 mm.

16. A method of manufacturing a polymer-molded material, comprising:
(a) preparing a mold having a molding surface formed with a three-dimensional pattern for imparting a surface shape to a molded material;
(b) coupling a gasket to an edge of the molding surface of the mold;
(c) injecting a raw material for a polymer-molded material onto the molding surface of the mold; and
(d) transferring the three-dimensional pattern from the molding surface of the mold while heat-curing the raw material.

17. The method according to claim 16, wherein the three-dimensional pattern of the molding surface of the mold is formed by at least one selected from among numerical control (NC) processing, chemical etching and stamping.

18. The method according to claim 16, wherein the raw material comprises a resin composition curable by heat, light or electron beam irradiation.

19. The method according to claim 18, wherein the resin composition has a viscosity of 300 cPs to 500 cPs.

20. The method according to claim 18, wherein the raw material comprises at least one selected from among pearl, pigments and chips.

21. The method according to claim 16, wherein the molding surface of the mold is coated with a release agent.

22. The method according to claim 16, wherein the mold comprises at least one selected from among metal, Teflon and rubber.

23. The method according to claim 16 wherein a frame unit made of a glass or metal honeycomb sheet is attached to an outer surface of the mold.

24. An exterior material for home appliances or furniture, wherein a three-dimensional pattern is transferred to a cured material while a resin composition curable by heat, light or electron beam irradiation is cured on a molding surface of a mold formed with a three-dimensional pattern, so that the three-dimensional pattern is formed on the surface of the cured material.

25. The external material according to claim 24, wherein the exterior material is transparent or white.

26. The external material according to claim 24, wherein the three-dimensional pattern has a thickness of 1mm or more.

27. A molded material for decorating an outer surface of a home appliance, the molded material having a thickness of 2 mm to 7 mm and comprising a three-dimensional surface having a three-dimensional pattern and a flat rear surface attached to the outer surface of the home appliance.

28. The molded material according to claim 27, wherein the molded material is manufactured by curing a resin composition using a mold having a molding surface formed with a three-dimensional pattern.

29. The molded material according to claim 27, wherein the molded material comprises acrylic artificial marble.

30. A home appliance comprising the molded material according to claim 27 attached thereto.

31. A home appliance comprising the molded material according to claim 29 attached thereto.
